Europäisches Patentamt

**European Patent Office**

**Office européen des brevets**

(11) Publication number: **0 055 398**
**A1**

## (12) EUROPEAN PATENT APPLICATION

(21) Application number: **81110016.3**

(22) Date of filing: **30.11.81**

(51) Int. Cl.³: **B 62 D 25/20**

(30) Priority: **27.12.80 JP 188274/80 U**

(43) date of publication of application:
**07.07.82 Bulletin 82/27**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Fukuda, Nobuyoshi**
**No. 3-3-7, Kataseyama**
**Fujisawa City(JP)**

(72) Inventor: **Kudo, Michio**
**No. 1-22-1, Soyagi**
**Yamato City(JP)**

(74) Representative: **Ter Meer-Müller-Steinmeister**
**Patentanwälte**
**Triftstrasse 4**
**D-8000 München 22(DE)**

(54) Brace arrangement for reinforcing a sheet material structure.

(57) There is provided an improved brace arrangement for reinforcing a sheet material structure, for instance in a vehicle bodywork. The vehicle bodywork has a portion of a closed sectional shape including a corner (A) formed by a floor panel (12) and a rear seat cross member (14). The portion is deformable causing the angle of the corner (A) to be decreased when the vehicle bodywork is subjected to tension. A brace (20) is interposed between the floor panel (12) and the rear seat cross member (14) and has a pair of flanges (20a) and an inclined wall (20c). The flanges (20a) are fixedly attached to the rear seat cross member (14), whereas the inclined wall (20c) is arranged so as to be only abuttingly engaged with the floor panel (12) or to be spaced from the floor panel (12).

*FIG.5*

0055398

- 1 -

DESCRIPTION

The present invention relates in general to brace arrangements in various structures and particularly to a brace arrangement in a vehicle bodywork.

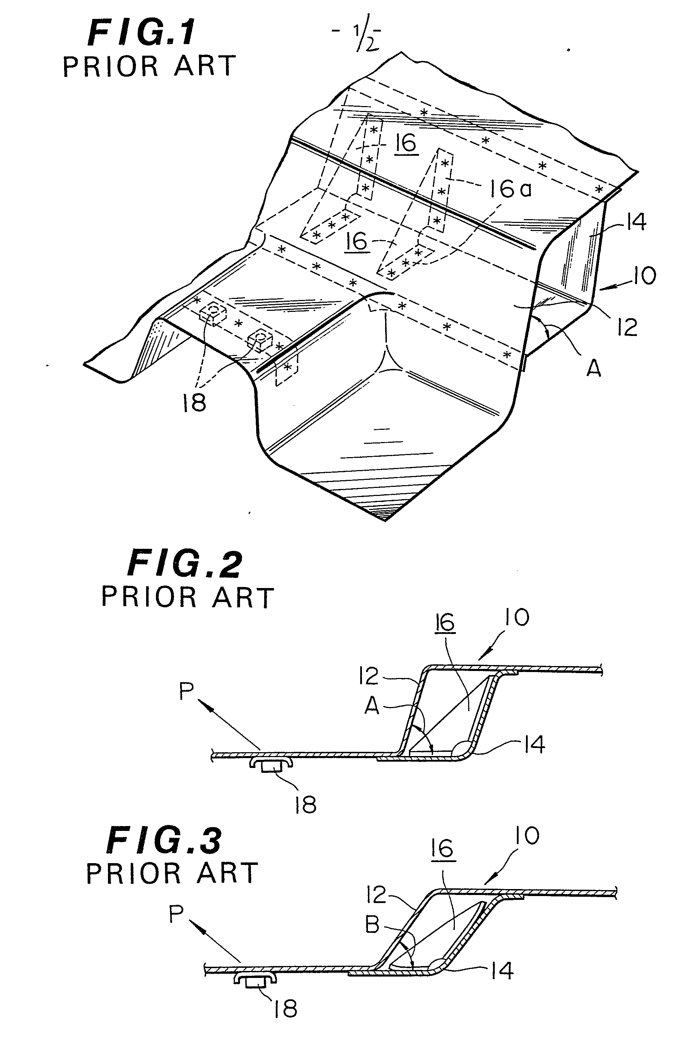

In Figs. 1 to 3, there is shown a prior art brace arrangement in a vehicle bodywork. The vehicle bodywork has a transverse beam-like portion 10 of a closed section or configuration. The beam-like portion 10 is formed by a floor panel 12 and a rear seat cross member 14 and has a corner of a predetermined angle A. Braces 16 are provided for the purpose of reinforcing the beam-like portion 10. Each brace 16 has two flanges 16a where it is spot-welded to the rear seat cross member 14. Designated by the reference numeral 18 are nuts for receiving seat belt anchorage bolts (not shown). The nuts 18 are located forwardly of the beam-like portion 10 and fixedly attached to the floor panel 12.

The brace arrangement described above has the disadvantage that the spot-welded flanges 16a of each brace 16 have a tendency of being easily stripped off the rear seat cross member 14 upon a head-on collision of the vehicle, making it impossible for a seat belt to function properly, and consequently an assured safety of a passenger cannot be attained. That is, upon the collision of the vehicle, the nut 18 receives from the seat belt a considerably large force, for example, a force P as shown in Fig. 2, subjecting the beam-like portion 10 to tension. The lower part of the beam-like portion 10 is thus pulled leftwardly in the drawing whilst the upper part rightwardly, trying to reduce the angle of the corner A whilst on the contrary to increase the angle of another corner where the brace 16 is fitted. When this is the case, the welded or fused junction of the brace 16 with the rear seat cross member 14 may be easily broken, allowing the beam-like portion 10 to be deformed from the shape of Fig. 2 to that of Fig. 3. The angle of the corner A of Fig. 3 is reduced to B as shown in Fig. 3.

It is accordingly an object of the present invention to provide an improved and novel arrangement in a structure such as a vehicle bodywork which is free from the foregoing drawbacks inherent in the prior art brace arrangement of the described type.

It is another object of the present invention to provide an improved and novel brace arrangement of the above-mentioned character which can effectively increase the rigidity or strength of the structure, particularly under the condition in which the structure is subjected to tension.

It is a further object of the present invention to provide an improved and novel brace arrangement of the above-mentioned character which enables to attain an assured safety of a passenger when applied to a vehicle bodywork.

In accordance with the present invention, there is provided an improved brace arrangement in a sheet material structure. The sheet material structure has a portion of a closed sectional shape including a corner formed by first and second structural members of the structure. The portion of the structure is deformable causing the angle of the corner to be decreased when the structure is subjected to a force.

The improved brace arrangement comprises a brace interposed between the first and second structural members. The brace has an attaching surface fixedly attached to the first structural member and an abutting surface for supporting by abuttment the second structural member so as to prevent the angle of the corner from decreasing beyond a predetermined value.

With the improved brace arrangement of the invention, the abutting surface of the brace and the cooperating surface of the second structural member are pressed against each other when the portion of the structure is subjected to force, thus enabling to increase the rigidity of the structure and to attain an assured safety of a passenger.

The features and advantages of the improved brace arrangement of the present invention will become more clearly appreciated from the following description taken in conjunction with the accompanying drawings, in which:

Fig. 1 is a perspective view of a prior art brace arrangement in a vehicle bodywork;

Fig. 2 is a longitudinal section of the vehicle bodywork of Fig. 1;

Fig. 3 is a view similar to Fig. 2 and shows a deformed condition of the vehicle bodywork of Fig. 1 when the bodywork is subjected to tension;

Fig. 4 is a perspective view of a brace arrangement in a vehicle bodywork according to an embodiment of the present invention;

Fig. 5 is a longitudinal section of the vehicle bodywork of Fig. 4; and

Fig. 6 is a view similar to Fig. 5 but shows a modified embodiment of the present invention.

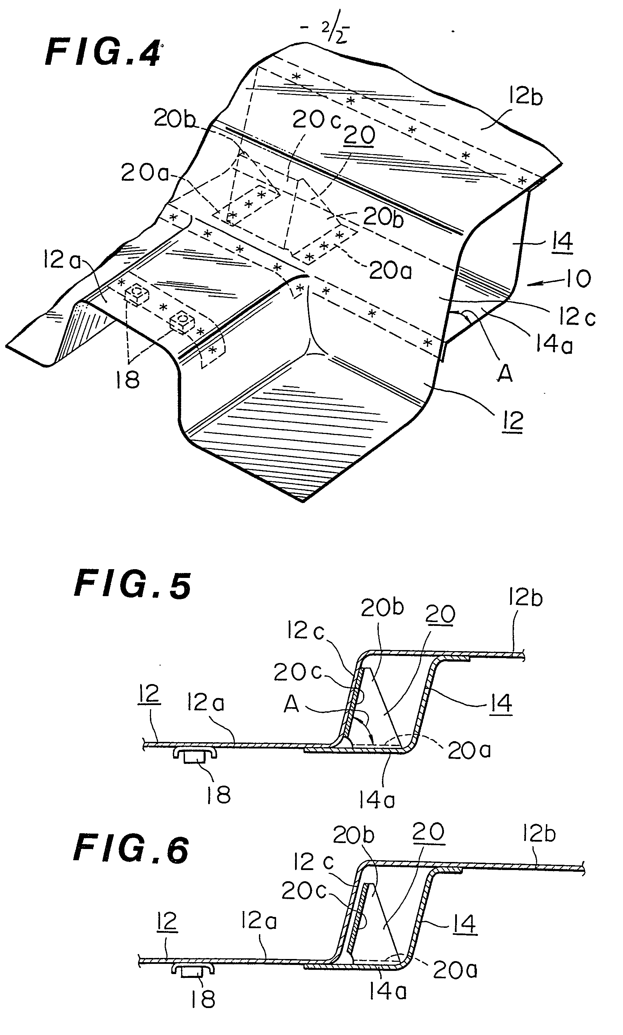

Referring now to the drawings in which like reference numerals designate like parts throughout the several views thereof, there is shown in Figs. 4 and 5 a brace arrangement in a vehicle bodywork according to an embodiment of the present invention.

The vehicle bodywork has a portion 10 of a closed sectional shape including a corner A formed by a floor panel 12 and a rear seat cross member 14. The vehicle bodywork portion 10 is deformable causing the angle of the corner A to be decreased when the vehicle bodywork and consequently the portion 10 thereof is subjected to tension.

For the purpose of increasing the rigidity of the vehicle bodywork, particularly under the condition in which the vehicle bodywork is subjected to tension, there is provided a brace 20 which is interposed between the floor panel 12 and the rear seat cross member 14. The brace 20 has a pair of attaching surfaces 20a fixedly attached to the rear seat cross member 14 and an abutting surface 20b supporting by abutment the floor panel 12.

More specifically, the brace 20 is in the form of having a pair of spaced horizontal flanges 20a, a pair of upstanding side walls 20b extending consecutively from the respective flanges 20a and an inclined wall 20c interconnecting the side walls 20b. The rear seat cross member 14 is of an angle-like section including a horizontal wall 14a to which the horizontal flanges 20a are spot-welded. The floor panel 12 has a stepped configuration consisting of a pair of horizontal walls 12a, 12b and an upstanding wall 12c which cooperates with the horizontal wall 14a of the rear seat cross member 14 to form the corner A of a predetermined angle. The inclined wall 20c is adapted to make with the horizontal wall 14a of the rear seat cross member 14 substantially the same angle as that of the corner A. In this embodiment, it is to be noted that the flanges 20a of the brace 20 are fixedly attached by spot-welding to the rear seat cross member 14, whereas the inclined wall 20b is not fixedly attached to the floor panel 12 but only abuttingly engaged with same.

With the foregoing brace arrangement of this invention, the vehicle bodywork can be effectively increased in rigidity. That is, when the nut 18 receives from a cooperating seat belt (not shown) a force upon a head-on collision of the vehicle, the vehicle bodywork portion 10 is subjected to tension. The horizontal walls 12a, 12b of the floor panel 12 are pulled in the opposite directions, trying to incline the upstanding wall 12c in the direction to reduce the angle of the corner A. The brace 20, however, resists strongly against such movement of the upstanding wall 12c of the floor panel 12 since the brace 20 is effectively or ideally interposed between the floor panel 12 and the rear seat cross member 14. That is, when the vehicle bodywork portion 10 is subjected to tension, the flanges 20a of the brace 20 and the horizontal wall 14a of the rear seat cross member 14 are pressed against each other whilst the upstanding wall 20b of the brace 20 are also similarly pressed against each other. As a result, the welded or fused junction of the brace 20b with the rear seat cross member 14 is assuredly prevented from being broken, thus making it possible for the seat belt to function properly and enabling to attain an assured safety of a passenger.

Fig. 6 shows a modified embodiment of the present invention. This embodiment is substantilly same as the previous embodiment of Figs. 4 and 5 except that the inclined wall 20c of the brace 20 is arranged so as to be spaced from the floor panel 12 when there is no deformation of the vehicle bodywork. The amount of spacing is set in view of the allowable amount of deformation of the vehicle bodywork portion 10.

- 8 -

The embodiment of Fig. 6 can produce substantially the same effect as that of the previous embodiment of Figs. 4 and 5. Furthermore, the embodiment of Fig. 6 has the advantage that the brace 20 has no possibility of its inclined wall 20c striking against the upstanding wall 12c of the floor panel to produce noises during normal use. Still furthermore, the spaced arrangement of the brace 20 with respect to the floor panel 12 is excellent in painting and curing of paint.

Obviously, many variations and modifications of the present invention are possible in light of the above teachings. It is, therefore, to be understood that within the scope of the appended claims, the invention may be practiced otherwise than as specifically described.

## CLAIMS

1. Brace arrangement for reinforcing a sheet material structure having a portion of a closed sectional shape including a corner formed by first and second structural members of the structure, the portion of the structure being deformable causing the angle of the corner to be decreased when the structure is subjected to a force, and a brace interposed between the first and second structure members,

c h a r a c t e r i z e d in that said brace (20) has an attaching surface (20a) fixedly attached to the first structural member (14) and an abutting surface (20c) for supporting by abuttment the second structural member (12) so as to prevent the angle of the corner (A) from decreasing beyond a predetermined value.

2. Brace arrangement as set forth in claim 1, c h a r a c t e r i z e d in that the abutting surface (20c) of the brace (20) is arranged to directly engage the second structural member (12) even in the absence of the force.

3. Brace arrangement as set forth in claim 1, c h a r a c t e r i z e d in that the abutting surface (20c) of the brace (20) is arranged to be spaced from the second structural member (12) in the absence of the force.

0055398

## FIG.1
### PRIOR ART

## FIG.2
### PRIOR ART

## FIG.3
### PRIOR ART

0055398

**FIG.4**

- 2/2 -

**FIG.5**

**FIG.6**

0055398

European Patent
Office

Application number

EP 81 11 0016.3

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| Y | US - A - 3 132 891 (PYURO et al.)<br>* entire document * | 1 |
| Y | US - A - 3 759 540 (OLSON)<br>* fig. 1 to 4 * | 1 |
| A | GB - A - 992 773 (AUSTIN) | |
| A | DE - C - 642 861 (HUMBOLDT-DEUTZ-MOTOREN) | |

**CLASSIFICATION OF THE APPLICATION (Int. Cl. 3)**

B 62 D 25/20

**TECHNICAL FIELDS SEARCHED (Int.Cl. 3)**

B 62 D 25/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 31-03-1982 | LUDWIG |

EPO Form 1503.1 06.78